# EUROPÄISCHE PATENTANMELDUNG

(11) **EP 4 782 723 A1**
(43) Veröffentlichungstag der Anmeldung: **29.07.2026**
(21) Anmeldenummer: 26153017.4
(22) Anmeldetag: 20.01.2026
(51) Int. Cl.: F16H 61/02

(54) **VERFAHREN ZUM STEUERN EINES SCHALTVORGANGS EINER ARBEITSMASCHINE**

(30) Priorität: 23.01.2025 DE 102025102350
(71) Anmelder: ZF Friedrichshafen AG, 88046 Friedrichshafen (DE)
(72) Erfinder: Madlener, Matthias, 88367 Hohentengen (DE); Glöckner, Rico, 94060 Pocking (DE)
(74) Vertreter: ZF Friedrichshafen AG

(57) **Zusammenfassung**

Ein Verfahren ist zum Steuern eines Schaltvorgangs einer Arbeitsmaschine (2) vorgesehen. Die Arbeitsmaschine (2) weist ein Arbeitssystem und eine Energiespeichereinrichtung (11) auf. Das Arbeitssystem weist eine Energiespeichereinrichtung (11) und ein Schaltgetriebe (15) auf. Die Traktionseinheit weist einen Traktionsmotor (21) auf. Das Schaltgetriebe (15) stellt zumindest zwei Gangstufen (16, 17) bereit, die einen Überdeckungsbereich bezogen auf eine Fahrgeschwindigkeit der Arbeitsmaschine (2) aufweisen. Der Traktionsmotor (21) ist zum Fortbewegen der Arbeitsmaschine (2) über Energie aus dem Arbeitssystem antreibbar. Das Verfahren umfasst ein Erkennen (I) einer Schaltsituation. Das Verfahren umfasst ein Erfassen (II) eines Traktionsleistungsparameters des Traktionsmotors (21). Das Verfahren umfasst ein Erfassen (III) eines Systemleistungsparameters des Arbeitssystems. Das Verfahren umfasst ein Ausführen (IV) eines Schaltvorgangs von einer der beiden Gangstufen (16, 17) in die andere der beiden Gangstufen (16, 17) unter Berücksichtigung des Systemleistungsparameters, des Traktionsleistungsparameters und des Überdeckungsbereichs.

## Beschreibung

### Technisches Gebiet

Die vorliegende Erfindung bezieht sich auf ein Verfahren zum Steuern eines Schaltvorgangs einer Arbeitsmaschine, auf eine Steuereinrichtung zum Ausführen eines Verfahrens zum Steuern eines Schaltvorgangs und auf eine Arbeitsmaschine mit einer Steuereinrichtung.

### Stand der Technik

Verfahren zum Steuern einer Arbeitsmaschine sind bekannt. Mit der zunehmenden Komplexität von Arbeitsmaschinen und sich ändernden Emissionsanforderungen an Arbeitsmaschinen gibt es einen Bedarf an Verfahren, mit denen eine Arbeitsmaschine effizient betrieben werden kann.

### Darstellung der Erfindung

Es ist eine Aufgabe der vorliegenden Erfindung, ein verbessertes Verfahren zum Steuern eines Schaltvorgangs einer Arbeitsmaschine bereitzustellen, die einen effizienten und komfortablen Schaltvorgang eines Schaltgetriebes einer Antriebsvorrichtung ermöglicht.

Die Aufgabe wird von einer Steuereinrichtung gelöst, die die Merkmale des Anspruchs 1 aufweist. Vorteilhafte Weiterbildungen sind Gegenstand der abhängigen Ansprüche.

In einem ersten Aspekt ist ein Verfahren zum Steuern eines Schaltvorgangs einer Arbeitsmaschine vorgesehen. Die Arbeitsmaschine kann als Bau oder Landmaschine, wie ein Radlader, ein Kipper, ein Kran, eine Planierraupe, ein Traktor oder dergleichen, ausgestaltet sein. Die Arbeitsmaschine weist ein Arbeitssystem und eine Traktionseinheit auf. Das Arbeitssystem weist eine Energiespeichereinrichtung und ein Schaltgetriebe auf. Das Arbeitssystem kann weitere Komponenten, wie einen Nebenverbraucher und eine Brennstoffzelleneinrichtung, aufweisen. Die Traktionseinheit weist einen Traktionsmotor auf. Die Traktionseinheit kann weitere Komponenten, wie einen Inverter, aufweisen. Das Schaltgetriebe stellt zumindest zwei Gangstufen bereit, die einen Überdeckungsbereich bezogen auf eine Fahrgeschwindigkeit der Arbeitsmaschine aufweisen. Der Traktionsmotor ist zum Fortbewegen der Arbeitsmaschine über Energie aus dem Arbeitssystem antreibbar. Ein Ausgangselement, wie eine Ausgangswelle, des Traktionsmotors kann zum Antreiben des Schaltgetriebes mechanisch mit einem Eingangselement, wie einer Eingangswelle, des Schaltgetriebes wirkverbunden sein. Das Schaltgetriebe kann zum Antreiben von Traktionselementen, wie Antriebsräder, eingerichtet sein.

Sind zwei Elemente mechanisch wirkverbunden, so sind diese unmittelbar oder mittelbar derart miteinander gekoppelt, dass eine Bewegung des einen Elements eine Reaktion des anderen Elements bewirkt. Beispielsweise kann eine mechanische Wirkverbindung durch eine formschlüssige oder reibschlüssige Verbindung bereitgestellt werden. Die mechanische Wirkverbindung kann einem Kämmen von korrespondierenden Verzahnungen der zwei Elemente entsprechen. Zwischen den Elementen können dabei weitere Elemente, beispielsweise eine oder mehrere Stirnradstufen, vorgesehen sein. Unter einer permanent drehfesten Verbindung zweier Elemente wird hingegen eine Verbindung verstanden, bei welcher die beiden Elemente zu allen bestimmungsgemäßen Zuständen des Getriebes starr miteinander gekoppelt sind. Die Elemente können dabei als drehfest miteinander verbundene Einzelkomponenten oder auch einstückig vorliegen. Über ein Schaltelement, beispielsweise eine Kupplung oder Bremse, kann hingegen eine drehfeste Verbindung zwischen zwei Elementen selektiv hergestellt oder aufgelöst werden.

Das Verfahren umfasst in einem ersten Schritt ein Erkennen einer Schaltsituation. Das Verfahren umfasst in einem zweiten Schritt ein Erfassen eines Traktionsleistungsparameters der Traktionseinheit. Das Verfahren umfasst in einem dritten Schritt ein Erfassen eines Systemleistungsparameters des Arbeitssystems. Das Verfahren umfasst in einem vierten Schritt ein Ausführen eines Schaltvorgangs von einer der beiden Gangstufen in die andere der beiden Gangstufen unter Berücksichtigung des Systemleistungsparameters, des Traktionsleistungsparameters und des Überdeckungsbereichs.

Die Energiespeichereinrichtung kann eine Batterie oder einen Akku aufweisen. Die Energiespeichereinrichtung kann zum Ausgeben und Speichern einer Energie, beispielsweise elektrischer Energie, ausgestaltet sein. Die Energiespeichereinrichtung kann zum Versorgen zumindest eines von dem Traktionsmotor und dem Nebenverbraucher mit Energie für deren Betrieb eingerichtet sein. Die Energiespeichereinrichtung kann zum Versorgen des Schaltgetriebes mit Energie zum Ausführen eines Schaltvorganges eingerichtet sein. Die Energiespeichereinrichtung kann zum Aufnehmen von Energie von zumindest einem von dem Traktionsmotor und der Brennstoffzelleneinrichtung eingerichtet sein.

Das Schaltgetriebe kann zumindest eines von einem Planetenradsatz und einem Stirnradsatz aufweisen. Das Schaltgetriebe kann unterschiedliche Übersetzungsverhältnisse bereitstellen. Ein Übersetzungsverhältnis kann in Zusammenhang mit einer Gangstufe sein. Ausgehend von einer Drehzahl des Traktionsmotors kann ein Übersetzungsverhältnis in Zusammenhang einer bestimmten Fahrzeuggeschwindigkeit oder einem Bereich einer Fahrzeuggeschwindigkeit sein. Eine bestimmte Gangstufen kann für einen bestimmten Bereich einer Fahrzeuggeschwindigkeit vorgesehen sein. Eine erste Gangstufe kann für einen Bereich einer niedrigen Fahrzeuggeschwindigkeit, kann für ein hohes Übersetzungsverhältnis und kann für eine hohe Zugkraft vorgesehen sein. Eine zweite Gangstufe kann für einen Bereich einer hohen Fahrzeuggeschwindigkeit, kann für ein niedriges Übersetzungsverhältnis und kann für eine niedrige Zugkraft vorgesehen sein. Die Bereiche der Fahrzeuggeschwindigkeit der ersten Gangstufe und der zweiten Gangstufe können einander überschneiden und damit den Überdeckungsbereich bilden. Eine untere Grenzgeschwindigkeit und eine obere Grenzgeschwindigkeit kann jeweils eine Grenze des Überdeckungsbereichs bilden. Das Schaltgetriebe kann mehr als zwei Gangstufen bereitstellen. Jeweils zwei Gangstufen können einen Überdeckungsbereich aufweisen. Bei mehr als zwei Gangstufen können mehr als ein Überdeckungsbereich vorgesehen sein. Das Schaltgetriebe kann Schaltelemente aufweisen, über deren Schließen und Öffnen die verschiedenen Gangstufen einlegbar sind.

Die Traktionseinheit kann zumindest eines von einem Inverter und einem Leistungsregler aufweisen. Zumindest einer von dem Inverter und dem Leistungsregler kann elektrisch zwischen das Arbeitssystem und den Traktionsmotor geschaltet sein. Der Inverter und der Leistungsregler können jeweils zum Regeln eines Leistungsfluss zwischen der Energiespeichereinrichtung und dem Traktionsmotor ausgestaltet sein. Ein Regeln eines Leistungsfluss kann ein Regeln zumindest eines von einer elektrischen Leistung, einer elektrischen Energie, einer Stromstärke und einer elektrischen Spannung von der Energiespeichereinrichtung zu dem Traktionsmotor und vice versa umfassen. Der Traktionsmotor kann als Elektromotor, beispielsweise Synchronmaschine oder Asynchronmaschine, ausgestaltet sein. Der Traktionsmotor ist über Energie, beispielsweise zumindest eines von elektrischer Energie, elektrischer Leistung, Strom und Spannung, betreibbar.

Das Erkennen einer Schaltsituation kann basierend auf zumindest einem von einem Betriebszustand, beispielsweise einer Bergauffahrt, oder einer Konstantfahrt, der Arbeitsmaschine und einem Fahrerwunsch erfolgen. Zum Erkennen eines Betriebszustands kann die Arbeitsmaschine entsprechende Sensoren aufweisen. Zum Erkennen eines Fahrerwunsches kann die Arbeitsmaschine zumindest eines von einem Gaspedal oder Fahrpedal und einem Bedienelement beispielswese für einen Nebenverbraucher aufweisen. Ist das Fahrpedal beispielsweise vollständig betätigt, kann ein Beschleunigen oder ein Kick-Down-Betrieb der Arbeitsmaschine erkennbar sein.

Abhängig von zumindest einem von dem Betriebszustand und einer bestimmten Fahrgeschwindigkeit kann eine Schaltstrategie und ein Vorzugsschaltpunkt vorgesehen sein. Die bestimmte Fahrgeschwindigkeit kann von einer Vorzugsfahrgeschwindigkeit gebildet sein, bei der der Schaltvorgang vorzugsweise durchgeführt wird. Zumindest eine von der oberen und der unteren Grenzgeschwindigkeit kann einen Vorzugsschaltpunkt bilden. Beispielsweise kann beim Erkennen einer Bergauffahrt zumindest eines von einem Rückschalten und ein Verringern der Fahrgeschwindigkeit vorgesehen sein. Ein Rückschalten kann dabei von einem Schaltvorgang von der zweiten Gangstufe in die erste Gangstufe vorgesehen sein. Beispielsweise kann beim Erkennen einer Konstantfahrt ein Hochschalten bei einer niedrigen Fahrgeschwindigkeit, beispielsweise der unteren Grenzgeschwindigkeit, vorgesehen sein. Das Hochschalten kann dabei von einem Schaltvorgang von der ersten Gangstufe in die zweite Gangstufe vorgesehen sein. Beispielsweise kann beim Erkenn eines Kick-Down-Betriebs ein Schaltvorgang vorgesehen sein, bei dem erst bei einer hohen Fahrgeschwindigkeit, beispielsweise der oberen Grenzgeschwindigkeit, von der ersten Gangstufe in die zweite Gangstufe hochgeschalten wird. Der Vorzugsschaltpunkt kann von einer Effizienz des Schaltgetriebes abhängig sein. Beispielswese kann der Vorzugsschaltpunkt so vorgesehen sein, dass Betriebsbereiche des Schaltgetriebes mit einer niedrigen Effizienz vermieden werden.

Der Vorzugsschaltpunkt kann bezogen auf den Überdeckungsbereich möglichst spät vorgesehen sein, beispielsweise in einem dynamischen Fahrzustand, wie einem Beschleunigen oder Verzögern. Beispielsweise kann sowohl ein Rückschalten als auch ein Hochschalten in dem Überdeckungsbereich möglichst spät vorgesehen sein. Der Vorzugsschaltpunkt kann so vorgesehen sein, dass eine Hysterese in dem Überdeckungsbereich möglichst weitläufig ausgenutzt wird. Die Hysterese kann dabei beispielsweise von einem Bereich der Fahrzeuggeschwindigkeit gebildet werden, für den die Fahrzeuggeschwindigkeit in der ersten Gangstufe erhöht werden kann und in der zweiten Gangstufe verringert werden kann.

Ein Traktionsleistungsparameter kann einen Wert zumindest eines von einer Traktionsenergie, einer Traktionsleistung, einer Traktionsstromstärke, einer Traktionsspannung und eines Traktionsdrehmoments aufweisen. Es können mehrere Traktionsleistungsparameter vorgesehen sein. Es kann für jeden Betriebszustand der Arbeitsmaschine ein Traktionsleistungsparameter vorgesehen sein. Ein Traktionsleistungsparameter kann von zumindest einem von dem Inverter, dem Leistungsregler und dem Traktionsmotor ausgebbar sein. Der Traktionsleistungsparameter kann sich auf einen Wert, beispielsweise der Traktionsleistung, der Traktionsstromstärke und der Traktionsspannung, beziehen, der jeweils von der Traktionseinheit aufgenommen werden kann und/oder abgegeben werden kann. Der Traktionsleistungsparameter kann von der Traktionsleistung, der Traktionsstromstärke, der Traktionsspannung oder dergleichen gebildet sein, die die Traktionseinheit zum Betreiben des Traktionsmotors aufnehmen kann, beispielsweise zum Beschleunigen oder für eine Konstantfahrt der Arbeitsmaschine. Der Traktionsleistungsparameter kann von der Traktionsleistung, der Traktionsstromstärke, der Traktionsspannung oder dergleichen gebildet sein, die die Traktionseinheit an das Arbeitssystem abgeben kann, beispielsweise bei einer Rekuperation von Energie durch den Traktionsmotor.

Ein Systemleistungsparameter kann einen Wert zumindest eines von einer Systemenergie, einer Systemleistung, einer Systemstromstärke und einer Systemspannung aufweisen. Es können mehrere Systemleistungsparameter vorgesehen sein. Es kann für jeden Betriebszustand der Arbeitsmaschine ein Systemleistungsparameter vorgesehen sein. Ein Systemleistungsparameter kann von einer Systemsteuereinrichtung ausgebbar sein. Ein Systemleistungsparameter kann sich auf einen Wert, beispielsweise der Systemleistung, der Systemstromstärke und der Systemspannung, beziehen, der von dem Arbeitssystem aufgenommen werden kann und/oder abgegeben werden kann. Das Erfassen des Systemleistungsparameters kann das Bilden einer Energiebilanz, einer Leistungsbilanz, einer Spannungsbilanz oder einer Strombilanz der Komponenten des Arbeitssystems oder einer Kombination davon umfassen. Der Wert des Systemleistungsparameters, der von dem Arbeitssystem abgegeben werden kann, kann erhöhbar sein, wenn zumindest von einem von der Energiespeichereinrichtung und der Brennstoffzelleneinrichtung Energie ausgebbar ist. Der Wert des Systemleistungsparameters, der von dem Arbeitssystem abgegeben werden kann, kann reduzierbar sein, wenn die Energiespeichereinrichtung einen niedrigen Ladezustand erreicht. Der Wert des Systemleistungsparameters, beispielsweise der Systemleistung, die von dem Arbeitssystem abgegeben werden kann, kann reduzierbar sein, wenn ein Nebenverbraucher betrieben wird.

Das Ausführen des Schaltvorgangs kann ein Auswerten des Traktionsleistungsparameter und des Systemleistungsparameters umfassen. Basierend auf dem Traktionsleistungsparameter und dem Systemleistungsparameter kann ein Ermitteln einer Leistungsfähigkeit des Arbeitssystems und der Traktionseinheit vorgesehen sein. Wenn die Leistungsfähigkeit von zumindest einem von dem Arbeitssystem und der Traktionseinheit zu gering für einen Betriebszustand ist, kann ein Verschieben des Schaltpunkts von dem Vorzugsschaltpunkt zu einer höheren Fahrgeschwindigkeit oder einer niedrigeren Fahrgeschwindigkeit beispielsweise als der Vorzugsfahrgeschwindigkeit vorgesehen sein. Für das Ausführen des Schaltvorgangs kann ein Verschieben des Schaltpunkts von dem Vorzugsschaltpunkt innerhalb des Überdeckungsbereichs und basierend auf dem Traktionsleistungsparameter und dem Systemleistungsparameter vorgesehen sein.

Ein Rückschalten in eine niedrigere Gangstufe mit einem größeren Übersetzungsverhältnis kann bei einer hohen Fahrgeschwindigkeit innerhalb des Überdeckungsbereichs, beispielsweise bei der oberen Grenzgeschwindigkeit, vorgesehen sein, wenn die Leistungsfähigkeit sowohl des Arbeitssystems als auch der Traktionseinheit groß genug ist. Die Leistungsfähigkeit des Arbeitssystems kann hoch sein, wenn die Energiespeichereinrichtung einen hohen Ladezustand aufweist oder kein Nebenverbraucher betrieben wird. Dann kann der Wert des Systemleistungsparameters, beispielsweise der elektrischen Systemleistung, die von dem Arbeitssystem an die Traktionseinheit abgegeben werden kann, groß sein. Die Leistungsfähigkeit der Traktionseinheit kann hoch sein, wenn eine Temperatur des Traktionsmotors, beispielsweise des Stators oder Rotors, gering ist. Dann kann der Wert des Traktionsleistungsparameters, beispielsweise der elektrischen Traktionsleistung, die von der Traktionseinheit aufgenommen werden kann, groß sein.

Ein Rückschalten in eine niedrigere Gangstufe kann bei einer niedrigen Fahrgeschwindigkeit innerhalb des Überdeckungsbereichs, beispielsweise bei der unteren Grenzgeschwindigkeit, vorgesehen sein, wenn die Leistungsfähigkeit zumindest eines von dem Arbeitssystem und der Traktionseinheit gering ist. Die Leistungsfähigkeit des Arbeitssystems kann gering sein, wenn die Energiespeichereinrichtung einen niedrigen Ladezustand aufweist oder ein Nebenverbraucher betrieben wird. Dann kann Wert des Systemleistungsparameters, beispielsweise der elektrischen Systemleistung, die von dem Arbeitssystem an die Traktionseinheit abgegeben werden kann, klein sein. Die Leistungsfähigkeit der Traktionseinheit kann gering sein, wenn eine Temperatur des Traktionsmotors, beispielsweise des Stators oder Rotors, hoch ist. Dann kann der Wert des Traktionsleistungsparameters, beispielsweise der elektrischen Traktionsleistung, die von der Traktionseinheit aufgenommen werden kann, klein sein. Auch ein Hochschalten in eine höhere Gangstufe kann, beispielsweise bei einer Rekuperation, in Abhängigkeit von dem Systemleistungsparameter und dem Traktionsleistungsparameter erfolgen.

Der Schaltpunkt kann in Abhängigkeit eines maximalen Drehmoments des Traktionsmotors als Traktionsleistungsparameter bezogen auf den Vorzugsschaltpunkt verschiebbar sein. Der Schaltpunkt kann in Abhängigkeit einer maximalen Stromstärke und/oder Spannung des Traktionsmotors und/oder des Inverters als Traktionsleistungsparameter bezogen auf den Vorzugsschaltpunkt verschiebbar sein.

In einer Ausführungsform des Verfahrens umfasst der Traktionsleistungsparameter zumindest eines von einem Traktionsdrehmoment, einer Traktionsleistung, einer Traktionsstromstärke und einer Traktionsspannung der Traktionseinheit. Der Traktionsleistungsparameter kann von zumindest einem von dem Traktionsdrehmoment, der Traktionsleistung, der Traktionsstromstärke und der Traktionsspannung gebildet sein. Der Traktionsleistungsparameter kann unter Berücksichtigung von zumindest einem von dem Traktionsdrehmoment, der Traktionsleistung, der Traktionsstromstärke und der Traktionsspannung abgeleitet werden.

Der Wert des jeweiligen Traktionsleistungsparameters kann von zumindest einem von dem Traktionsmotor, dem Inverter und dem Leistungsregler ausgebbar sein. Der Traktionsleistungsparameter kann Werte aufweisen, beispielsweise einer Traktionsenergie, einer Traktionsleistung, einer Traktionsstromstärke, einer Traktionsspannung und eines Traktionsdrehmoments, mit der die Traktionseinheit beispielsweise für eine Konstantfahrt oder Bergauffahrt betreibbar ist und die von der Traktionseinheit beispielsweise bei einer Rekuperation an das Arbeitssystem ausgebbar ist. Beispielsweise kann der Inverter zwischen das Arbeitssystem und den Traktionsmotor zum Steuern der Energieversorgung des Traktionsmotors geschaltet sein. Dann kann der Inverter den Traktionsleistungsparameter ausgeben.

Der Traktionsleistungsparameter kann von zumindest einem von einer Temperatur, beispielsweise eines Magneten, eines Stators oder eines Rotors, des Traktionsmotors abhängig sein. Der Traktionsleistungsparameter kann erhöhbar sein, wenn die Temperatur niedrig ist. Der Traktionsleistungsparameter kann reduzierbar sein, wenn die Temperatur hoch ist. Die Abhängigkeit kann in einem Kennfeld, beispielsweise Leistungskennfeld des Traktionsmotors, hinterlegbar sein. Das Kennfeld kann in der Steuereinrichtung speicherbar sein.

Der Traktionsleistungsparameter kann von einer Verlustleistung oder einem Derating-Effekt, beispielsweise des Traktionsmotors oder des Inverters, abhängen. Der Traktionsleistungsparameter kann erhöhbar sein, wenn der Derating-Effekt hoch ist. Der Traktionsleistungsparameter kann reduzierbar sein, wenn der Derating-Effekt niedrig ist. Der Derating-Effekt kann von einem Betriebspunkt des Traktionsmotors abhängig sein. Die Abhängigkeit kann in einem Kennfeld, beispielsweise einem Derating-Kennfeld, hinterlegbar sein. Das Kennfeld kann in der Steuereinrichtung speicherbar sein.

In einer Ausführungsform des Verfahrens umfasst der Systemleistungsparameter zumindest eines von einer Systemleistung, einer Systemstromstärke und einer Systemspannung des Arbeitssystems. Der Systemleistungsparameter kann von zumindest einem von der Systemleistung, der Systemstromstärke und der Systemspannung des Arbeitssystems gebildet sein. Der Systemleistungsparameter kann unter Berücksichtigung von zumindest einem von der Systemleistung, der Systemstromstärke und der Systemspannung des Arbeitssystems abgeleitet werden.

Der Wert des jeweiligen Systemleistungsparameters kann zumindest von einem von der Energiespeichereinrichtung, einem Batteriemanagementsystem, einem Leistungsregler und einer Systemsteuereinrichtung ausgebbar sein. Der Systemleistungsparameter kann Werte aufweisen, beispielsweise einer Systemenergie, einer Systemleistung, einer Systemstromstärke und einer Systemspannung, die von dem Arbeitssystem an die Traktionseinheit abgebbar sind und die von dem Arbeitssystem von der Traktionseinheit aufnehmbar sind und beispielsweise in der Energiespeichereinrichtung speicherbar oder zum Antreiben des Nebenverbrauchers nutzbar sind.

Der Systemleistungsparameter kann von zumindest einem von einem Batterieladezustand SOC, einem Batteriegesundheitszustand SOC und einer Temperatur der Energiespeichereinrichtung abhängig sein. Der Systemleistungsparameter kann reduzierbar sein, wenn der Batterieladezustand oder der Batteriegesundheitszustand gering ist oder die Temperatur hoch ist, oder eine Kombination davon. Der Systemleistungsparameter kann erhöhbar sein, wenn der Batterieladezustand oder der Batteriegesundheitszustand hoch ist oder die Temperatur niedrig ist, oder eine Kombination davon. Die Abhängigkeit kann in einem Kennfeld, beispielsweise Leistungskennfeld des Traktionsmotors, hinterlegbar sein. Das Kennfeld kann in der Steuereinrichtung speicherbar sein.

In einer Ausführungsform des Verfahrens erfolgt das Erfassen des Systemleistungsparameters unter Berücksichtigung eines Betriebs der Brennstoffzelleneinrichtung, wobei das Arbeitssystem die Brennstoffzelleneinrichtung aufweist.

Die Brennstoffzelleneinrichtung kann im Betrieb zum Ausgeben einer Energie, beispielsweise einer Leistung, einer Stromstärke oder einer Spannung beispielsweise pro Zeit ausgestaltet sein. Bei einem Betreiben der Brennstoffzelleneinrichtung kann der Wert des Systemleistungsparameters, beispielsweise mit dem die Traktionseinheit betreibbar ist, erhöhbar sein.

In einer Ausführungsform des Verfahrens erfolgt das Erfassen des Systemleistungsparameters unter Berücksichtigung eines Betriebs des Nebenverbrauchers, wobei das Arbeitssystem den Nebenverbraucher aufweist.

Die Arbeitsmaschine kann einen oder mehrere Nebenverbraucher aufweisen. Ein Nebenverbraucher kann von einem Zapfwellenantrieb oder einem PTO-System, einem Arbeitsmotor, einer Hubeinrichtung, einer Hydraulikeinrichtung, einer Pneumatikeinrichtung, einer Kühleinrichtung oder einer Beleuchtungseinrichtung gebildet sein. Der Nebenverbraucher kann über Energie von zumindest einem von der Energiespeichereinrichtung und der Brennstoffzelleneinrichtung betreibbar sein. Bei einem Betreiben zumindest eines Nebenverbrauchers kann der Wert des Systemleistungsparameters, beispielsweise mit dem die Traktionseinheit betreibbar ist, reduzierbar sein. Der Systemleistungsparameter kann von einer Hubkinematik der Hubeinrichtung abhängig sein. Für Positionen der Hubeinrichtung mit einem hohen Energiebedarf kann der Systemleistungsparameter reduzierbar sein.

In einer Ausführungsform des Verfahrens umfasst das Erkennen der Schaltsituation ein Erfassen eines Fahrerwunsches.

Zum Erkennen eines Fahrerwunsches kann die Arbeitsmaschine zumindest eines von einem Gaspedal oder Fahrpedal und einem Bedienelement beispielswese für einen Nebenverbraucher aufweisen. Dann kann das Erkennen einer Schaltsituation das Erfassen zumindest eines von einer Fahrpedalstellung und einer Bedienelementstellung, beispielsweise über einen Positionssensor oder einen Drucksensor, umfassen. Ist das Fahrpedal beispielsweise vollständig betätigt, kann ein Beschleunigen oder ein Kick-Down-Betrieb der Arbeitsmaschine erkennbar sein.

In einer Ausführungsform des Verfahrens umfasst das Erkennen der Schaltsituation ein Erfassen eines Betriebszustands der Arbeitsmaschine.

Ein Betriebszustand der Arbeitsmaschine kann beispielsweise von einer Konstantfahrt, einem Beschleunigen, einer Rekuperation, einem Verzögern oder Bremsen, einer Berganfahrt, einer Bergauffahrt, einer Bergabfahrt, einem Ausführen einer Arbeitsaufgabe der Arbeitsmaschine oder dergleichen gebildet sein. Wird beispielsweise eine sich der Arbeitsmaschine nähernde Steigung erkannt, kann eine Bergauffahrt erkennbar sein. Wird beispielsweise ein sich der Arbeitsmaschine näherndes Hindernis oder ein Zielort erkannt, kann ein Verzögern erkennbar sein. Das Erkennen der Schaltsituation kann ein Erfassen und Auswerten von Signalen von zumindest einem Sensor umfassen. Der Sensor kann von einem Drehzahlsensor, Beschleunigungssensor, Neigungssensor, GPS-Sensor, Temperatursensor, Drucksensor, Positionssensor, Stromsensor, Spannungssensor, einer Kamera oder dergleichen gebildet sein. Das Erkennen der Schaltsituation kann zumindest eines von einem Erfassen der Fahrgeschwindigkeit, einem Erfassen einer Drehzahl des Traktionsmotors, einer Neigung der Arbeitsmaschine und einem Erfassen einer eingelegten Gangstufe umfassen.

In einem zweiten Aspekt ist eine Steuereinrichtung vorgesehen, die zum Ausführen eines Verfahrens nach einer der vorhergehenden Ausführungsformen eingerichtet ist. Weitere Merkmale, Wirkungen und Vorteile für den zweiten Aspekt können dem ersten Aspekt entnommen werden. Ferner stellen Merkmale, Wirkungen und Vorteile des zweiten Aspekts auch Merkmale, Wirkungen und Vorteile für den ersten Aspekt dar.

Die Steuereinrichtung kann eine Eingangsschnittstelle und eine Ausgangsschnittstelle aufweisen. Die Eingangsschnittstelle und die Ausgangsschnittstelle können jeweils zum Übertragen elektrischer Signale eingerichtet sein. Die Eingangsschnittstelle kann zum Empfangen von Systeminformationen, beispielsweise der Fahrgeschwindigkeit, der eingelegten Gangstufe, dem Systemleistungsparameter und dem Traktionsleistungsparameter eingerichtet sein. Die Ausgangsschnittstelle kann zum Ausgeben von Signalen zum Steuern von zumindest einem von dem Schaltgetriebe und dem Traktionsmotor eingerichtet sein.

In einem dritten Aspekt ist eine Arbeitsmaschine mit einer Steuereinrichtung nach dem vorhergehenden Aspekt vorgesehen. Weitere Merkmale, Wirkungen und Vorteile für den dritten Aspekt können einem der vorhergehenden Aspekte entnommen werden. Ferner stellen Merkmale, Wirkungen und Vorteile des dritten Aspekts auch Merkmale, Wirkungen und Vorteile für die vorhergehenden Aspekte dar. Die Arbeitsmaschine kann beispielsweise als ein Kipper ausgestaltet sein. Die Arbeitsmaschine weist ein Arbeitssystem, eine Traktionseinheit und ein Traktionselement auf. Das Arbeitssystem weist eine Energiespeichereinrichtung und ein Schaltgetriebe auf. Die Traktionseinheit weist einen Traktionsmotor auf. Der Traktionsmotor ist über Energie aus der Energiespeichereinrichtung betreibbar. Das Traktionselement ist von dem Traktionsmotor zum Fortbewegen der Arbeitsmaschine über das Schaltgetriebe antreibbar.

Ein Traktionselement kann als Rad, beispielswese Antriebsrad, oder Kettenlaufwerk ausgebildet sein. Das Traktionselement kann mechanisch, beispielsweise über zumindest eines von dem Schaltgetriebe, einem Differentialgetriebe, einer Gelenkwelle und einem Gedenk, mit einem Ausgangselement, beispielsweise einer Ausgangswelle, des Traktionsmotors zum Fortbewegen der Arbeitsmaschine wirkverbunden sein. Über die Gelenkwellen und/oder Gelenke zwischen dem Traktionselement und dem Ausgangselement des Traktionsmotors oder einem Ausgangselement des Schaltgetriebes kann ein Lenkwinkel oder ein Federweg bereitstellbar sein.

In einer Ausführungsform der Arbeitsmaschine kann das Arbeitssystem zumindest eines von einer Brennstoffzelleneinrichtung und einem Nebenverbraucher aufweisen.

Die Brennstoffzelleneinrichtung kann zum Ausgeben von Energie, beispielsweise zum Antreiben zumindest eines von der Traktionseinheit und dem Nebenverbraucher, eingerichtet sein. Der Nebenverbraucher kann beispielsweise von einem Arbeitsmotor für eine Arbeitseinrichtung, beispielsweise eine Hubeinrichtung, einen Zapfwellenantrieb oder dergleichen, aufweisen. Die Arbeitseinrichtung kann zum Ausführen einer Arbeitsaufgabe, beispielsweise dem Heben einer Last, eingerichtet sein. Der Nebenverbraucher kann von einem Arbeitsmotor für eine Fluidpumpe, beispielsweise eine Wasserpumpe, Hydraulikpumpe oder Pneumatikpumpe, gebildet sein.

### Kurze Beschreibung der Figuren

Figur 1 zeigt ein Leistungsdiagramm einer Ausführungsform einer Energiespeichereinrichtung für eine Arbeitsmaschine.
Figur 2 zeigt ein Zugkraftdiagramm einer Ausführungsform einer Arbeitsmaschine mit einem Schaltgetriebe.
Figur 3 zeigt eine Prinzipdarstellung einer Ausführungsform eines Verfahrens zum Steuern eines Schaltvorgangs der Arbeitsmaschine.
Figur 4 zeigt eine Prinzipdarstellung einer Ausführungsform einer Steuereinrichtung zum Ausführen des Verfahrens.
Figur 5 zeigt eine Draufsicht einer Prinzipdarstellung einer Ausführungsform der Arbeitsmaschine.

### Detaillierte Beschreibung von Ausführungsformen

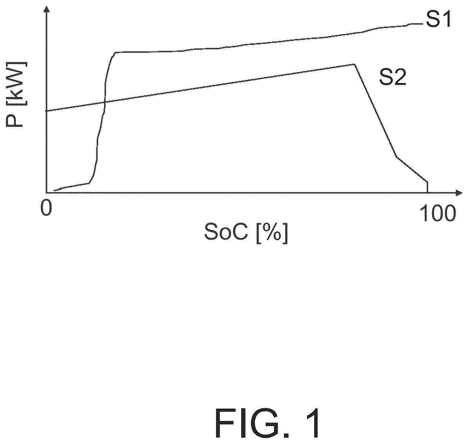

Figur 1 zeigt ein Leistungsdiagramm einer Ausführungsform einer in Figur 1 nicht dargestellten Energiespeichereinrichtung 11, vorliegend eine Batterie, für eine in Figur 1 nicht dargestellten Arbeitsmaschine 2. Die Kurve S1 stellt einen Leistungsverlauf für ein Entladen der Energiespeichereinrichtung 11 dar. Die Kurve S2 stellt einen Leistungsverlauf für ein Entladen der Energiespeichereinrichtung 11 dar. Auf der Ordinate ist ein Ladezustand der Energiespeichereinrichtung 11 in % dargestellt. Auf der Abszisse ist eine Leistung der Energiespeichereinrichtung 11 in kW dargestellt. Für einen zunehmenden Ladezustand nimmt sowohl die Entladeleistung S1 als auch die Ladeleistung S2 der Energiespeichereinrichtung 11 zu. Für einen niedrig werdenden Ladezustand nimmt die Entladeleistung S1 sprunghaft ab. Für einen hoch werdenden Ladezustand nimmt die Ladeleistung S2 sprunghaft ab.

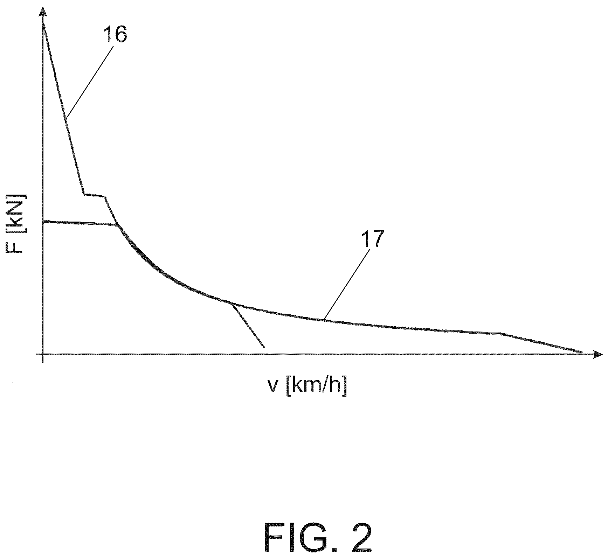

Figur 2 zeigt ein Zugkraftdiagramm einer Ausführungsform der in Figur 2 nicht dargestellten Arbeitsmaschine 2 mit einem in Figur 2 nicht dargestellten Schaltgetriebe 15. Das Schaltgetriebe 15 stellt eine erste Gangstufe 16 mit einem großen Übersetzungsverhältnis und eine zweite Gangstufe 17 mit einem kleinen Übersetzungsverhältnis bereit. Auf der Ordinate ist eine Fahrgeschwindigkeit im km/h dargestellt. Auf der Abszisse ist eine Zugkraft der Arbeitsmaschine 2 in kN dargestellt. Die erste Gangstufe 16 ist für niedrige Fahrgeschwindigkeiten vorgesehen. Die zweite Gangstufe 17 ist für hohe Fahrgeschwindigkeiten vorgesehen. Die erste Gangstufe 16 und die zweite Gangstufe 17 weisen einen Überdeckungsbereich bezogen auf die Fahrgeschwindigkeit auf. In dem Überdeckungsbereich kann die Arbeitsmaschine 2 wahlweise in der ersten Gangstufe 16 oder in der zweiten Gangstufe 17 betrieben werden. Überschreitet die Fahrgeschwindigkeit eine obere Grenzgeschwindigkeit des Überdeckungsbereichs, wird die Antriebsmaschine 2 in der zweiten Gangstufe 17 betrieben. Die obere Grenzgeschwindigkeit bildet einen Vorzugsschaltpunkt für einen Schaltvorgang von der ersten Gangstufe 16 in die zweite Gangstufe 17, beispielsweise während eines Beschleunigens der Arbeitsmaschine 2. Unterschreitet die Fahrgeschwindigkeit eine untere Grenzgeschwindigkeit des Überdeckungsbereich, wird die Arbeitsmaschine 2 in der ersten Gangstufe 16 betrieben. Die untere Grenzgeschwindigkeit bildet einen Vorzugsschaltpunkt für einen Schaltvorgang von der zweiten Gangstufe 17 in die erste Gangstufe 16, beispielsweise während eines Verzögerns der Arbeitsmaschine 2.

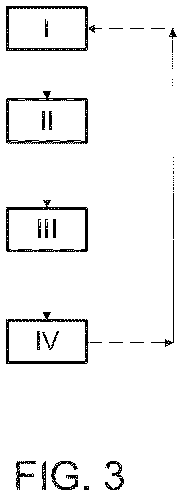

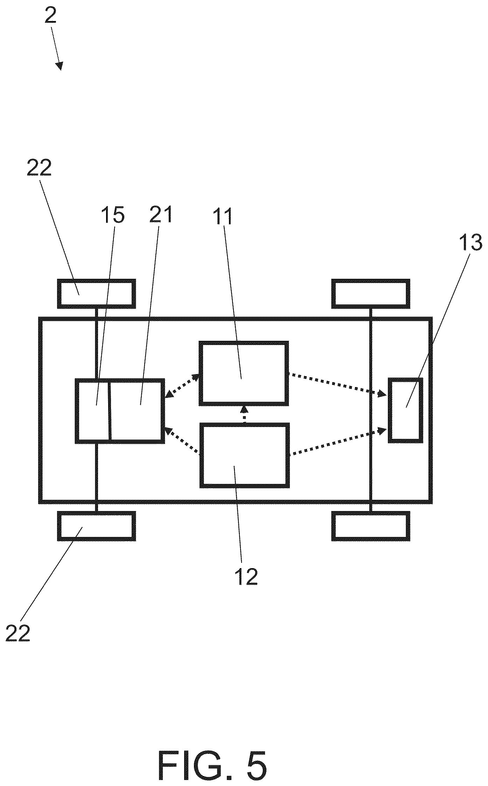

Figur 3 zeigt eine Prinzipdarstellung einer Ausführungsform eines Verfahrens zum Steuern eines Schaltvorgangs der Arbeitsmaschine 2, die mit Bezug auf Figur 5 genauer beschrieben wird. Die Arbeitsmaschine 2 weist ein Arbeitssystem und eine Traktionseinheit auf. Das Arbeitssystem weist die in Figur 3 nicht dargestellte Energiespeichereinrichtung 11 und das in Figur 3 nicht dargestellte Schaltgetriebe 15 auf. Die Traktionseinheit weist einen in Figur 3 nicht dargestellten Traktionsmotor 21 auf. Das Schaltgetriebe 15 stellt die zwei Gangstufen 16, 17 bereit, die den Überdeckungsbereich bezogen auf die Fahrgeschwindigkeit der Arbeitsmaschine 2 aufweisen. Der Traktionsmotor 21 ist über Energie aus dem Arbeitssystem antreibbar, die von der Energiespeichereinrichtung 11 bereitgestellt wird.

Das Verfahren umfasst in einem ersten Schritt ein Erkennen I einer Schaltsituation. Das Erkennen einer Schaltsituation basiert vorliegend auf einem erfassten Betriebszustand der Arbeitsmaschine 2, beispielsweise einer Beschleunigung, einer Bergauffahrt, einer Konstantfahrt oder einer Bergabfahrt. Für jeden Betriebszustand liegt eine Schallstrategie und ein Vorzugsschaltpunkt vor.

Das Verfahren umfasst in einem zweiten Schritt ein Erfassen II eines Traktionsleistungsparameters der Traktionseinheit. Vorliegend umfasst der Traktionsleistungsparameter einen Wert für eine Traktionsleistung, die von der Traktionseinheit zum Antreiben des Traktionsmotors 21 aufgenommen werden kann. Außerdem umfasst der Traktionsleistungsparameter einen Wert für eine Traktionsleistung, die von der Traktionseinheit bei einem Rekuperationsbetrieb des Traktionsmotors 21 an das Arbeitssystem, beispielsweise zum Laden der Energiespeichereinrichtung 11, abgegeben werden kann. Vorliegend ist für jeden Betriebszustand der Arbeitsmaschine 2 ein entsprechender Traktionsleistungsparameter vorgesehen.

Das Verfahren umfasst in einem dritten Schritt ein Erfassen III eines Systemleistungsparameters des Arbeitssystems. Vorliegend umfasst der Systemleistungsparameter einen Wert für eine Systemleistung, beispielsweise eine Entladeleistung zum Antreiben des Traktionsmotors 21, die von dem Arbeitssystem an die Traktionseinheit übergeben werden kann. Außerdem umfasst der Systemleistungsparameter einen Wert für die Systemleistung, die von dem Arbeitssystem von der Traktionseinheit, beispielsweise eine Ladeleistung zum Laden der Energiespeichereinrichtung 11, bei einer Rekuperation durch den Traktionsmotor 21 aufgenommen werden kann. Dabei sind die Werte für die Systemleistung, beispielsweise die Ladeleistung und die Entladeleistung, von dem Ladezustand der Energiespeichereinrichtung 11 abhängig, wie mit Bezug auf Figur 1 beschriebenen ist.

Das Verfahren umfasst in einem vierten Schritt ein Ausführen IV eines Schaltvorgangs unter Berücksichtigung der Systemleistungsparameter, der Traktionsleistungsparameter und des Überdeckungsbereichs. Dabei wird anhand der Systemleistungsparameter und der Traktionsleistungsparameter eine Leistungsfähigkeit des Antriebssystems und der Traktionseinheit ausgewertet. Ist die Leistungsfähigkeit zumindest eines von dem Antriebssystem der Traktionseinheit zu gering, wird der Schaltpunkt von dem Vorzugsschaltpunkt je nach Betriebszustand zu einer höheren Fahrgeschwindigkeit oder zu einer niedrigeren Fahrgeschwindigkeit verschoben.

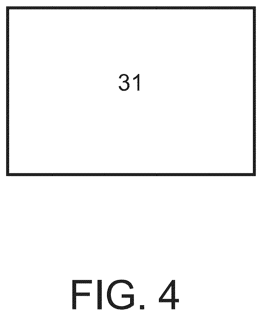

Figur 4 zeigt eine Prinzipdarstellung einer Ausführungsform einer Steuereinrichtung 31 zum Ausführen des Verfahrens. Die Steuereinrichtung 31 weist eine Eingangsschnittstelle zum Eingeben zumindest der Fahrgeschwindigkeit, der eingelegten Gangstufe, der Systemleistungsparameter und der Traktionsleistungsparameter auf. Die Steuereinrichtung 31 weist eine Ausgangsschnittstellte zum Ausgeben zumindest eines Steuersignals zum Steuern des Schaltvorgangs, insbesondere des Schaltgetriebes 15 und des Traktionsmotors 21 auf.

Figur 5 zeigt eine Draufsicht einer Prinzipdarstellung einer Ausführungsform der Arbeitsmaschine 2. Die Arbeitsmaschine 2 weist ein Arbeitssystem mit der Energiespeichereinrichtung 11, einer Brennstoffzelleneinrichtung 12, einem Nebenverbraucher 13, vorliegend einem Zapfwellenantrieb, dem Schaltgetriebe 15 und zwei Traktionselementen 22, vorliegend Antriebsräder, auf. Die Arbeitsmaschine 2 weist eine Traktionseinheit mit einem Traktionsmotor 21 und einem Inverter auf. Die Energiespeichereinrichtung 11 und die Brennstoffzelleneinrichtung 12 sind zum Ausgeben von elektrischer Energie zum Antreiben zumindest eines von dem Traktionsmotor 21 und im Nebenverbraucher 13 eingerichtet. Die Energiespeichereinrichtung 11 ist zum Aufnehmen von elektrischer Energie von zumindest einem von der Brennstoffzelleneinrichtung 12 und dem Traktionsmotor 21 eingerichtet. Die beiden Traktionselemente 22 sind jeweils an gegenüberliegenden Seiten in der Querrichtung der Arbeitsmaschine 2 vorgesehen. Jeweils eines der Traktionselemente 22 ist über eine Gelenkwelle, ein Differentialgetriebe und das Schaltgetriebe 15 zum Fortbewegen der Antriebsmaschine 2 mechanisch mit einer Ausgangswelle des Traktionsmotors 21 wirkverbunden.

### Bezugszeichen

- 2: Arbeitsmaschine
- 11: Energiespeichereinrichtung
- 12: Brennstoffzelleneinrichtung
- 13: Nebenverbraucher
- 15: Schaltgetriebe
- 16: Erste Gangstufe
- 17: Zweite Gangstufe
- 21: Traktionsmotor
- 22: Traktionselement
- 31: Steuereinrichtung

- S1: Entladeleistung
- S2: Ladeleistung

- I: Erkennen einer Schaltsituation
- II: Erfassen eines Traktionsleistungsparameters
- III: Erfassen eines Systemleistungsparameters
- IV: Ausführen eines Schaltvorgangs

## Patentansprüche

1. Verfahren zum Steuern eines Schaltvorgangs einer Arbeitsmaschine (2) mit einem Arbeitssystem, das eine Energiespeichereinrichtung (11) und ein Schaltgetriebe (15) aufweist, und einer Traktionseinheit, das einen Traktionsmotor (21) aufweist, wobei das Schaltgetriebe (15) zumindest zwei Gangstufen (16, 17) bereitstellt, die einen Überdeckungsbereich bezogen auf eine Fahrgeschwindigkeit der Arbeitsmaschine (2) aufweisen, und der Traktionsmotor (21) zum Fortbewegen der Arbeitsmaschine (2) über Energie aus dem Arbeitssystem antreibbar ist, wobei das Verfahren die Schritte umfasst:
Erkennen (I) einer Schaltsituation,
Erfassen (II) eines Traktionsleistungsparameters der Traktionseinheit (21),
Erfassen (III) eines Systemleistungsparameters des Arbeitssystems,
Ausführen (IV) eines Schaltvorgangs von einer der beiden Gangstufen (16, 17) in die andere der beiden Gangstufen (16, 17) unter Berücksichtigung des Systemleistungsparameters, des Traktionsleistungsparameters und des Überdeckungsbereichs.

2. Verfahren nach Anspruch 1, **dadurch gekennzeichnet, dass** der Traktionsleistungsparameter zumindest eines von einem Traktionsdrehmoment, einer Traktionsleistung, einer Traktionsstromstärke und einer Traktionsspannung der Traktionseinheit (21) umfasst.

3. Verfahren nach einem der Ansprüche 1 oder 2, **dadurch gekennzeichnet, dass** der Systemleistungsparameter zumindest eines von einer Systemleistung, einer Systemstromstärke und einer Systemspannung des Arbeitssystems umfasst.

4. Verfahren nach einem der vorhergehenden Ansprüche, **dadurch gekennzeichnet, dass** das Arbeitssystem eine Brennstoffzelleneinrichtung (12) aufweist und das Erfassen (III) des Systemleistungsparameters unter Berücksichtigung eines Betriebs der Brennstoffzelleneinrichtung (12) erfolgt.

5. Verfahren nach einem der vorgehenden Ansprüche, **dadurch gekennzeichnet, dass** das Arbeitssystem einen Nebenverbraucher (13) aufweist und das Erfassen (III) des Systemleistungsparameters unter Berücksichtigung eines Betriebs des Nebenverbrauchers (13) erfolgt.

6. Verfahren nach einem der vorhergehenden Ansprüche, **dadurch gekennzeichnet, dass** das Erkennen (I) der Schaltsituation ein Erfassen eines Fahrerwunsches umfasst.

7. Verfahren nach einem der vorhergehenden Ansprüche, **dadurch gekennzeichnet, dass** das Erkennen (I) der Schaltsituation ein Erfassen eines Betriebszustands der Arbeitsmaschine (2) umfasst.

8. Steuereinrichtung (31), die zum Ausführen eines Verfahrens nach einem der Ansprüche 1-7 eingerichtet ist.

9. Arbeitsmaschine (2) mit einer Steuereinrichtung (31) nach Anspruch 8, einem Arbeitssystem, das eine Energiespeichereinrichtung (11) und ein Schaltgetriebe (15) aufweist, einer Traktionseinheit, die einen Traktionsmotor (21) aufweist, und einem Traktionselement (22), wobei
der Traktionsmotor (21) über Energie aus der Energiespeichereinrichtung (11) betreibbar ist, und
das Traktionselement (22) zum Fortbewegen der Arbeitsmaschine (2) über das Schaltgetriebe (15) von dem Traktionsmotor (21) antreibbar ist.

10. Arbeitsmaschine (2) nach Anspruch 9, **dadurch gekennzeichnet, dass** das Arbeitssystem zumindest eines von einer Brennstoffzelleneinrichtung (12) und einem Nebenverbraucher (13) aufweist.
